# EUROPEAN PATENT SPECIFICATION

(11) **EP 3 734 050 B1**
(45) Date of publication and mention of the grant of the patent: **16.02.2022**
(21) Application number: 18894675.0
(22) Date of filing: 21.12.2018
(51) Int. Cl.: F02D 29/02, B60T 7/12, B62L 3/08, F02D 9/02, F16D 48/02, B60T 8/17, B60T 8/1766, B60W 30/18

(54) **SADDLED VEHICLE**
SATTELFAHRZEUG
VÉHICULE À SELLE

(30) Priority: 28.12.2017 JP 2017254820
(43) Date of publication of application: 04.11.2020
(73) Proprietor: HONDA MOTOR CO., LTD., Minato-ku Tokyo 107-8556 (JP)
(72) Inventor: KANETA, Hiroyuki, Wako-shi, Saitama 351-0193 (JP); IIZUKA, Chikashi, Wako-shi, Saitama 351-0193 (JP); IIDA, Chihiro, Wako-shi, Saitama 351-0193 (JP); NAKAMURA, Hironori, Wako-shi, Saitama 351-0193 (JP)
(74) Representative: Beder, Jens
(86) International application number: PCT/JP2018/047236
(87) International publication number: WO 2019/131504

(56) References cited:
- EP-A1- 2 527 217
- EP-A1- 2 815 941
- EP-A2- 3 124 370
- WO-A1-2011/113091
- JP-A- H04 151 354
- JP-A- H05 238 290
- JP-A- H08 144 813
- JP-A- 2004 017 763
- JP-A- 2006 046 300
- JP-A- 2008 179 179
- JP-A- 2011 102 572
- JP-A- 2014 008 886
- JP-A- 2017 024 644
- JP-A- 2017 024 645
- JP-U- S5 493 621
- US-A1- 2007 100 530

## Description

### Technical Field

The present invention relates to a saddled vehicle.

### Background Art

From the Japanese Patent Laid-Open No. 2005-145171, there has been known a vehicle that performs control to leave a drive force of an engine for a while even after an accelerator is turned off, as a shock measure when the accelerator is turned off.

US 2007/100530 A1 discloses a vehicle comprising an engine including an electronic throttle valve mechanism that drives an air intake throttle valve via an actuator, an automatic brake controller that performs automatic brake control to automatically increase a braking force of the brakes and an engine braking controller that controls the throttle valve so as to generate a force that offsets the engine braking of the engine when the vehicle is decelerated.

### Summary of Invention

### Technical Problem

Note that in a saddled vehicle such as a motorcycle including a vehicle body that is lighter than that of an automobile, engine braking easily affects behaviors of an occupant and the vehicle body when the vehicle is decelerated. An engine braking force varies in size, depending on a driving situation of the saddled vehicle. Consequently, it is considered that, for example, in case where the saddled vehicle is decelerated by an automatic brake, a variation of the engine braking affects the vehicle body behavior.

An aspect of the present invention has been developed in view of circumstances described above, and an object of the invention is to provide a saddled vehicle, in which engine braking is stabilized so that a saddled vehicle can be decelerated smoothly.

### Solution to Problem

This object is achieved by a saddled vehicle according to the enclosed independent claim 1. Advantageous features of the present invention are defined in the corresponding subclaims.

In the following, examples useful for understanding the invention are described.

According to an aspect, provided is a saddled vehicle comprising an engine (10) including an electronic throttle valve mechanism (27) that drives an air intake throttle valve via an actuator (27a), and a first control unit (31a) that controls the engine (10), characterized in that the first control unit (31a) comprises an engine braking controller (52) that controls the throttle valve so as to generate a force (Fc) that offsets the engine braking of the engine (10) when the vehicle is decelerated.

Furthermore, the above aspect may comprise a clutch mechanism (47) that disconnects and connects power transmission between the engine (10) and a wheel (3), and the first control unit (31a) may control a connected state of the clutch mechanism (47) to reduce the engine braking.

Additionally, the above aspect may comprise a brake (37) that brakes wheels (2, 3), a second control unit (31b) may comprise an automatic brake controller (55) that performs automatic brake control to automatically increase a braking force of the brake (37), and the automatic brake controller (55) may brake the wheels (2, 3) through the automatic brake control in a state where the engine braking is offset or a state where the engine braking is kept constant, by the engine braking controller (52).

Furthermore, in the above aspect, the brake (37) may comprise a rear wheel brake (33) that brakes a rear wheel (3) as the wheel, and in the automatic brake control, the rear wheel (3) that is a drive wheel to be driven by the engine (10) may be braked with the rear wheel brake (33).

Additionally, in the above aspect, the brake (37) may comprise a front wheel brake (32) that brakes a front wheel (2) that is a driven wheel, and in the automatic brake control, the automatic brake controller (55) may brake with the rear wheel brake (33) prior to the front wheel brake (32).

Furthermore, in the above aspect, the first control unit (31a) may perform control so that a deceleration in case where a braking force of the automatic brake control is combined with a force (Fc) that offsets or keeps the engine braking constant is smaller than a predetermined deceleration (g1).

Furthermore, in the above aspect, the first control unit (31a) and the second control unit (31b) may be provided separately.

### Advantageous Effects of Invention

According to a saddled vehicle of an aspect, the saddled vehicle comprises an engine including an electronic throttle valve mechanism that drives an air intake throttle valve via an actuator, and a first control unit that controls the engine, the first control unit comprises an engine braking controller that controls the throttle valve so as to generate a force that offsets the engine braking of the engine when the vehicle is decelerated.

According to this configuration, the engine braking controller controls the throttle valve to generate the force that offsets the engine braking when the vehicle is decelerated, and hence the engine braking can be stabilized so that the saddled vehicle can be decelerated smoothly.

Furthermore, in the above aspect, the saddled vehicle comprises a clutch mechanism that disconnects and connects power transmission between the engine and a wheel, and the first control unit may control a connected state of the clutch mechanism to reduce the engine braking. According to this configuration, the connected state of the clutch mechanism is controlled so that the engine braking can reduce.

Additionally, in the above aspect, the saddled vehicle comprises a brake that brakes wheels, a second control unit comprises an automatic brake controller that performs automatic brake control to automatically increase a braking force of the brake, and the automatic brake controller may brake the wheels through the automatic brake control in a state where the engine braking is offset or a state where the engine braking is kept constant, by the engine braking controller. According to this configuration, the automatic brake controller brakes the wheels through the automatic brake control in the state where the engine braking is offset or the state where the engine braking is kept constant, by the engine braking controller. Consequently, a variation of the engine braking can be prevented from affecting the braking of the automatic brake, and the saddled vehicle can be decelerated smoothly.

Furthermore, in the above aspect, the brake comprises a rear wheel brake that brakes a rear wheel as the wheel, and in the automatic brake control, the rear wheel that is a drive wheel to be driven by the engine may be braked with the rear wheel brake. According to this configuration, a behavior of the rear wheel that is the drive wheel is stabilized by offsetting the engine braking, and in the automatic brake control, the rear wheel is braked. Consequently, the variation of the engine braking can be prevented from affecting the braking of the automatic brake, and the saddled vehicle can be decelerated smoothly.

Additionally, in the above aspect, the brake comprises a front wheel brake that brakes a front wheel that is a driven wheel, and in the automatic brake control, the automatic brake controller may brake with the rear wheel brake prior to the front wheel brake. According to this configuration, the rear wheel is braked prior to the front wheel, front-back pitching of the saddled vehicle can reduce, and an operation of the automatic brake is hard to affect a posture of an occupant.

Furthermore, in the above aspect, the first control unit may perform control so that a deceleration in case where a braking force of the automatic brake control is combined with a force that offsets or keeps the engine braking constant is smaller than a predetermined deceleration. When the engine braking is offset, the saddled vehicle is not decelerated by the engine braking, and hence the braking force decreases. In the saddled vehicle, however, the deceleration by the automatic brake is limited due to effects on the occupant's posture. Consequently, even in case where the engine braking is offset or kept constant, the saddled vehicle can be sufficiently decelerated by the automatic brake. Furthermore, since the saddled vehicle is controlled so that the deceleration is smaller than the predetermined deceleration, the effects of the automatic brake on the occupant's posture can decrease.

Furthermore, in the above aspect, the first control unit and the second control unit may be provided separately. According to this configuration, the first control unit and the second control unit can be arranged individually, and a degree of freedom in arrangement is high.

### Brief Description of Drawings

[Fig. 1] Fig. 1 is a left side view of a motorcycle according to an embodiment of the present invention.
[Fig. 2] Fig. 2 is a block diagram of a brake device.
[Fig. 3] Fig. 3 is a diagram showing a braking force map of a front wheel brake and a rear wheel brake.
[Fig. 4] Fig. 4 is a graph showing a map of a target deceleration of automatic brake control.
[Fig. 5] Fig. 5 is a flowchart showing processing of the automatic brake control.
[Fig. 6] Fig. 6 is a flowchart showing processing of engine braking control.
[Fig. 7] Fig. 7 is a graph showing a change in hydraulic pressure of each of the front wheel brake and the rear wheel brake in the automatic brake control.
[Fig. 8] Fig. 8 is a graph showing a change in braking force in the automatic brake control.
[Fig. 9] Fig. 9 is a graph showing a relation among a vehicle speed, a drive force of an engine and a braking force of the brake device in the automatic brake control.
[Fig. 10] Fig. 10 is a schematic view showing a relation between a deceleration of the motorcycle by the braking force of the automatic brake control and a deceleration of the motorcycle by the drive force of the engine.

### Description of Embodiments

Hereinafter, description will be made as to embodiments of the present invention with reference to the drawings. Note that in the description, front and back, left and right and up and down directions are the same as in those to a vehicle body unless otherwise described. Furthermore, reference sign FR shown in each drawing indicates a vehicle body front, reference sign UP indicates a vehicle body up, and reference sign LH indicates a vehicle body left hand.

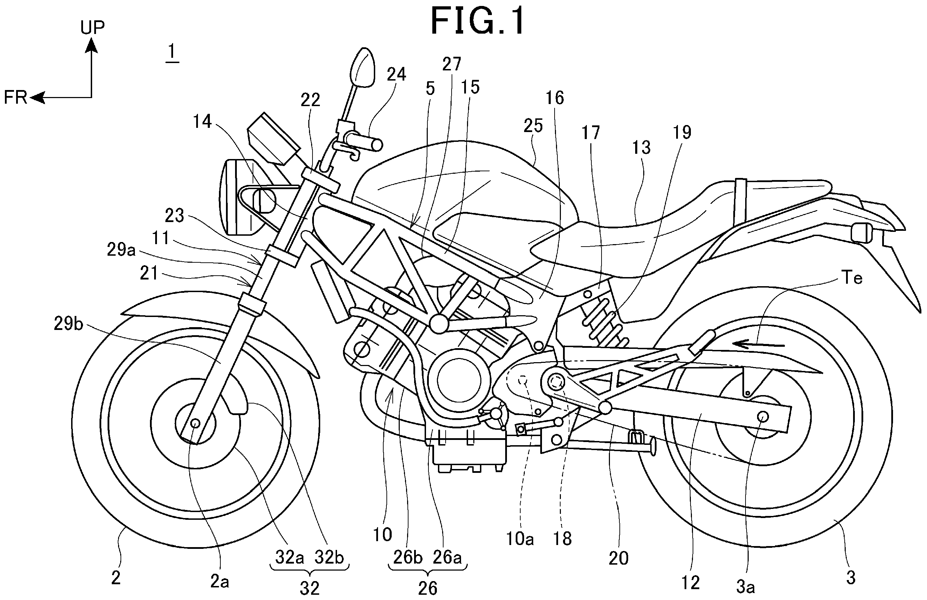

Fig. 1 is a left side view of a motorcycle according to an embodiment of the present invention.

A motorcycle 1 is a vehicle in which an engine 10 is supported as a power unit on a vehicle body frame 5, a steering system 11 steerably supporting a front wheel 2 (a wheel) is steerably supported on a front end of the vehicle body frame 5, and a swing arm 12 supporting a rear wheel 3 (a wheel) is provided on a rear side of the vehicle body frame 5. The motorcycle 1 is a saddled vehicle in which a seat 13 straddled and seated by an occupant is provided above a rear part of the vehicle body frame 5.

The vehicle body frame 5 comprises a head pipe 14, a main frame 15 extending downward and rearward from the head pipe 14, a plate-like center frame 16 provided at a rear end of the main frame 15, and a seat frame 17 extending upward and rearward from the center frame 16 to a vehicle rear part.

A pivot shaft 18 supporting the swing arm 12 is provided in a rear part of the engine 10. The swing arm 12 has a front end supported about the pivot shaft 18, and is swingable in an up-down direction about the pivot shaft 18. The rear wheel 3 is supported on an axle 3a of a rear end portion of the swing arm 12.

Note that the pivot shaft 18 just needs to be supported in the vehicle body formed by the engine 10, the vehicle body frame 5 and others, and may be provided in the vehicle body frame 5.

The swing arm 12 is coupled to the vehicle body via a rear suspension 19 provided between the swing arm 12 and the vehicle body frame 5 in a bridging manner.

The steering system 11 comprises a steering shaft (not shown) supported rotatably about the head pipe 14, a pair of right and left front forks 21 arranged on opposite right and left sides of the front wheel 2, a top bridge 22 fixed to an upper end of the steering shaft to couple upper portions of the right and left front forks 21, a bottom bridge 23 fixed to a lower end of the steering shaft to couple the right and left front forks 21, and a handle 24 fixed to an upper portion of the top bridge 22.

The pair of right and left front forks 21 shown in Fig. 1 form a telescopic suspension that makes a stroke in an axial direction.

Each of the front forks 21 comprises a fixed tube 29a fixed to the top bridge 22 and the bottom bridge 23, a movable tube 29b that makes a stroke in the axial direction to the fixed tube 29a, a fork spring (not shown) provided in these tubes and compressed in a stroke direction of the front fork 21, hydraulic oil, and a front side damping force adjusting section (not shown) that can adjust a damping force in the stroke of the front fork 21.

The front wheel 2 is supported about an axle 2a of lower end portions of the right and left front forks 21.

A fuel tank 25 is provided between the head pipe 14 and the seat 13.

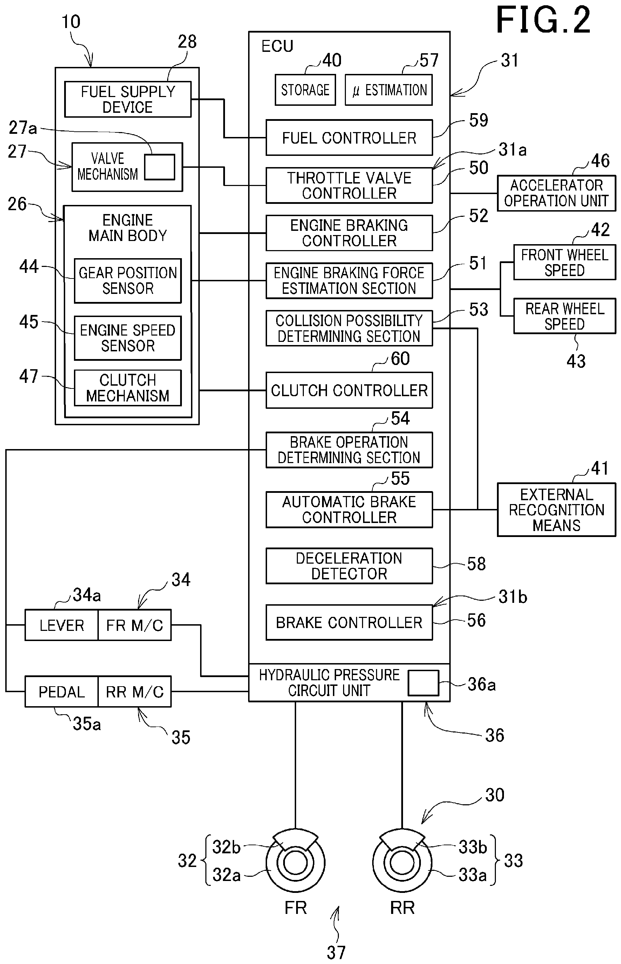

Fig. 2 is a block diagram of a brake device.

The brake device comprises a brake mechanism 30 that brakes the front wheel 2 and the rear wheel 3 with a hydraulic pressure (an oil pressure), and a control unit 31 that controls the brake mechanism 30.

The brake mechanism 30 comprises a front wheel brake 32, a rear wheel brake 33, a front master cylinder 34 for the front wheel brake 32, a rear master cylinder 35 for the rear wheel brake 33, and a hydraulic pressure circuit unit 36 that supplies the hydraulic pressure of each of the front wheel brake 32 and the rear wheel brake 33.

The front wheel brake 32 comprises a front brake disk 32a fixed to the front wheel 2, and a caliper 32b that pinches the front brake disk 32a with the hydraulic pressure to brake the front wheel 2.

The rear wheel brake 33 comprises a rear brake disk 33a fixed to the front wheel 2, and a caliper 33b that pinches the rear brake disk 33a with the hydraulic pressure to brake the rear wheel 3.

The front wheel brake 32 and the rear wheel brake 33 constitute a brake 37 that brakes the front wheel 2 and the rear wheel 3 as the wheels.

A front brake operation element 34a such as a brake lever is provided in the front master cylinder 34, and the front master cylinder 34 generates the hydraulic pressure in response to an operation of the front brake operation element 34a.

A rear brake operation element 35a such as a brake pedal is provided in the rear master cylinder 35, and the rear master cylinder 35 generates the hydraulic pressure in response to an operation of the rear brake operation element 35a.

The front master cylinder 34 is connected to the front wheel brake 32 via the hydraulic pressure circuit unit 36. The rear master cylinder 35 is connected to the rear wheel brake 33 via the hydraulic pressure circuit unit 36.

The brake device is a brake system that controls each of the front wheel brake 32 and the rear wheel brake 33 with an electric signal to pressurize and decompress the brakes.

The hydraulic pressure circuit unit 36 comprises a hydraulic pressure generation means 36a such as an electric pump to be controlled by the control unit 31, and can switch a hydraulic pressure route.

The control unit 31 can control the hydraulic pressure to be output from the hydraulic pressure circuit unit 36 to each of the front wheel brake 32 and the rear wheel brake 33 in accordance with the hydraulic pressure input from each of the front master cylinder 34 and the rear master cylinder 35 into the hydraulic pressure circuit unit 36.

The control unit 31 performs automatic brake control based on various pieces of information including vehicle information and external information, separately from the operations of the front brake operation element 34a and the rear brake operation element 35a by the occupant, to generate a braking force onto each of the front wheel brake 32 and the rear wheel brake 33.

The control unit 31 is an electronic control unit (ECU).

The control unit 31 comprises a computing unit (not shown) and a storage 40. The computing unit is a processor such as a CPU. The control unit 31 executes program stored in the storage 40, to perform antilock braking system control (ABS control), the automatic brake control and the like. The storage 40 is a nonvolatile memory, such as a flash ROM and an EEPROM, and stores the program to be executed by the computing unit, data to be processed by the computing unit and the like.

Detected information of operation amounts of the front brake operation element 34a and the rear brake operation element 35a are input into the control unit 31.

Furthermore, the control unit 31 is connected to an external recognition means 41, a wheel speed sensor 42 of the front wheel 2, a wheel speed sensor 43 of the rear wheel 3, and the hydraulic pressure circuit unit 36.

The control unit 31 acquires rotation of the front wheel 2 from the wheel speed sensor 42, and acquires rotation of the rear wheel 3 from the wheel speed sensor 43. The control unit 31 calculates a vehicle speed of the motorcycle 1 from detected values of the wheel speed sensor 42 and the wheel speed sensor 43.

The external recognition means 41 comprises, for example, radar equipment installed in an end part of the motorcycle 1. The radar equipment emits electromagnetic waves such as millimeter waves toward a front of the vehicle at a predetermined control period, and receives the reflected waves. The control unit 31 determines whether there is an obstacle (including another vehicle) in front of the vehicle, based on a transmission/reception state of the millimeter waves in the radar equipment and, if there is the obstacle, calculates a distance between this obstacle and the own vehicle and relative speeds. Hereinafter, the obstacle will be referred to as an obstacle ahead.

Note that the external recognition means 41 may be configured to use a camera in addition to the radar equipment, and to utilize any combination of transmitted/received information of the radar equipment with imaging information of the camera.

An engine 10 comprises an engine main body 26, an electronic throttle valve mechanism 27 that controls air intake into the engine main body 26, and a fuel supply device 28. The engine main body 26 comprises a crank case 26a (Fig. 1) that stores a crank shaft, a cylinder 26b (Fig. 1) provided with a piston, and a transmission. A drive force transmission member 20 (Fig. 1) is provided across an output shaft 10a (Fig. 1) of the transmission of the engine 10 and the rear wheel 3. Here, the drive force transmission member 20 is a chain.

The transmission of the engine 10 comprises a plurality of transmission gears of the engine 10 (e.g., first to sixth speeds). A transmission ratio of the transmission is largest at the first speed, and decreases from the first speed toward the sixth speed.

Furthermore, the engine main body 26 comprises a clutch mechanism 47 between a side of the above crank shaft and the above transmission. The clutch mechanism 47 is a friction clutch that disconnects and connects power transmission between the crank shaft side and the transmission. That is, the clutch mechanism 47 disconnects and connects the power transmission between the engine 10 and the rear wheel 3.

The clutch mechanism 47 comprises a clutch actuator (not shown) to be driven by a motor power, a hydraulic pressure or the like, and is controlled in a connected state, a disconnected state, and a half clutch state via the clutch actuator.

A drive force (rotation) of the engine 10 is transmitted to the rear wheel 3 through the crank shaft, the clutch mechanism 47, the transmission, and the drive force transmission member 20.

The engine main body 26 comprises a gear position sensor 44 that detects a state of the above transmission gear, and an engine speed sensor 45 that detects a speed of the engine 10.

The electronic throttle valve mechanism 27 is connected to an air intake port of the cylinder 26b. The electronic throttle valve mechanism 27 is controlled by the control unit 31 to drive a throttle valve disposed in an air intake passage via an actuator 27a and to adjust an amount of air to be taken into the cylinder 26b.

Various types of functional units that the control unit 31 has are formed by cooperation of software and hardware when the above computing unit executes the program.

The control unit 31 executes each processing and controls the brake device and the engine 10 by use of data stored in the storage 40.

The control unit 31 includes functions of a collision possibility determining section 53, a brake operation determining section 54, an automatic brake controller 55, a brake controller 56 (an antilock brake controller), a friction coefficient estimation section 57, a deceleration detector 58, a throttle valve controller 50, an engine braking force estimation section 51, an engine braking controller 52, a fuel controller 59, and a clutch controller 60.

The control unit 31 comprises a first control unit 31a that controls the engine 10 and respective parts of a vehicle body, and a second control unit 31b that controls a brake device.

The collision possibility determining section 53, the deceleration detector 58, the throttle valve controller 50, the engine braking force estimation section 51, the engine braking controller 52, the fuel controller 59 and the clutch controller 60 are provided in the first control unit 31a.

The brake operation determining section 54, the automatic brake controller 55, the brake controller 56 (the antilock brake controller) and the friction coefficient estimation section 57 are provided in the second control unit 31b.

Note that in the present embodiment, the first control unit 31a and the second control unit 31b are integrally provided, but the first control unit 31a and the second control unit 31b may be separately provided.

The collision possibility determining section 53 determines a possibility of collision of the motorcycle 1 with the obstacle ahead based on detected information of the external recognition means 41 and the wheel speed sensors 42, 43.

The brake operation determining section 54 determines situations indicating whether there is a brake operation by the occupant of the motorcycle 1 and including an operation amount of the brake operation.

The automatic brake controller 55 performs control to automatically increase the braking forces of the front wheel brake 32 and the rear wheel brake 33 in case where the collision possibility determining section 53 determines that there is the possibility of collision.

The brake controller 56 executes usual brake control to operate the front wheel brake 32 and the rear wheel brake 33 in response to inputs from the front brake operation element 34a and the rear brake operation element 35a, and also executes antilock brake control to avoid lock of each of the front wheel 2 and the rear wheel 3 by the front wheel brake 32 and the rear wheel brake 33. Here, the lock means that the rotation of the front wheel 2 or the rear wheel 3 stops during travel through the braking by the front wheel brake 32 and the rear wheel brake 33. In the antilock brake control, the brake controller 56 decreases the hydraulic pressures of the front wheel brake 32 and the rear wheel brake 33 that are likely to lock, to avoid the lock.

The friction coefficient estimation section 57 performs processing of estimating a friction coefficient of the road surface. The friction coefficient estimation section 57 calculates the friction coefficient of the road surface in accordance with a difference in wheel speed between the front wheel 2 and the rear wheel 3 based on detection results of the wheel speed sensors 42, 43. In the above difference in wheel speed, for example, the difference in wheel speed between the rear wheel 3 as a drive wheel and the front wheel 2 as a driven wheel is used.

The deceleration detector 58 detects deceleration of the motorcycle 1 based on the detection results of the wheel speed sensors 42, 43.

The throttle valve controller 50 detects a position of an accelerator operation unit 46 to be operated by an occupant, drives the actuator 27a in accordance with the position, and adjusts a position of the throttle valve. The electronic throttle valve mechanism 27 is a so-called by-wire system in which the throttle valve controller 50 electrically links the accelerator operation unit 46 to the throttle valve.

The engine braking force estimation section 51 calculates a size of an engine braking force from a vehicle speed, a gear position of the transmission gear by the gear position sensor 44, and the engine speed by the engine speed sensor 45. Here, the engine braking force is a rotation resistance of the engine 10 in case where the engine 10 is not combusted, and is mainly generated by an intake and exhaust pumping loss and a mechanical friction loss in the engine 10. If the vehicle speed of the motorcycle 1 is the same, the engine braking force increases as the transmission gear speed decreases. When this engine braking force is transmitted to the rear wheel 3 via the clutch mechanism 47, the drive force transmission member 20 and the like, engine braking acts to decelerate the motorcycle 1.

The fuel controller 59 controls fuel supply of the fuel supply device 28 to the engine 10.

The clutch controller 60 drives the clutch actuator to control the connected state of the clutch mechanism 47.

The engine braking controller 52 controls the engine 10 so that the engine braking force estimated by the engine braking force estimation section 51 is offset and the engine braking force is kept constant. In detail, the engine braking controller 52 controls the air intake amount by the electronic throttle valve mechanism 27, a fuel supply amount by the fuel supply device 28, and ignition by an ignition plug, to generate the drive force in the engine 10, and offsets the engine braking force of the engine braking to keep the force constant.

Furthermore, the engine braking controller 52 controls the connected state of the clutch mechanism 47 via the clutch controller 60 to offset the engine braking force estimated by the engine braking force estimation section 51 and to keep the engine braking generated in the rear wheel 3 constant. In detail, when the clutch mechanism 47 is brought into the connected state or the half clutch state, the engine braking force transmitted from the engine 10 to the rear wheel 3 decreases, and the engine braking that acts on the rear wheel 3 weakens.

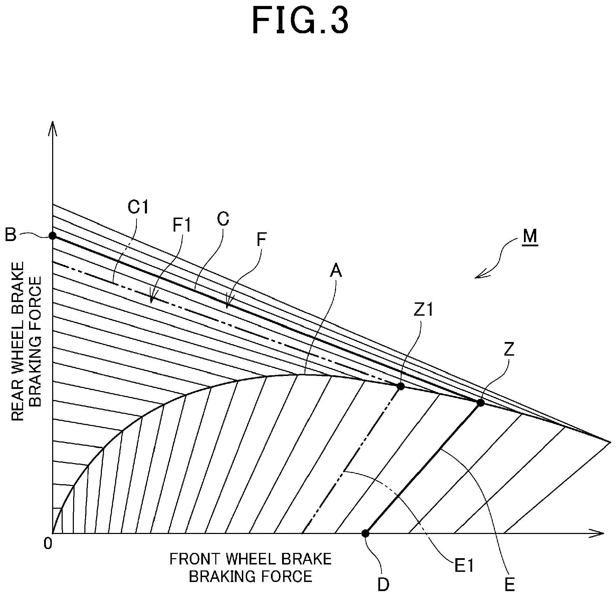

Fig. 3 is a diagram showing a braking force map M of the front wheel brake 32 and the rear wheel brake 33.

The braking force map M is stored in the storage 40. In the braking force map M, a vertical axis (one axis) indicates the braking force of the rear wheel brake 33, and a horizontal axis (the other axis) indicates the braking force of the front wheel brake 32.

The braking force map M shows an ideal growth curve A of each of the front wheel brake 32 and the rear wheel brake 33. In the ideal growth curve A, a point Z in a right part of the drawing is a front-back braking limit point at which a maximum deceleration is generated in the motorcycle 1 by combination of the front wheel brake 32 and the rear wheel brake 33, in case where the friction coefficient of the road surface has a certain value (e.g., 0.85). If the braking force increases to the front-back braking limit point Z or more, at least one of the front wheel 2 or the rear wheel 3 locks. The front-back braking limit point Z is a lock limit point of each of the front wheel 2 and the rear wheel 3.

A point B on the vertical axis is a rear wheel braking limit point in only operating the rear wheel brake 33. If the braking force of the rear wheel 3 increases to the rear wheel braking limit point B or more, the rear wheel 3 locks. The rear wheel braking limit point B is a lock limit point of the rear wheel 3.

Furthermore, a rear wheel brake boundary C linearly extending from the rear wheel braking limit point B to the front-back braking limit point Z indicates a braking force of the rear wheel brake 33 at lock limit.

A point D on the horizontal axis is a front wheel braking limit point in only operating the front wheel brake 32, and if the braking force of the front wheel 2 increases to the front wheel braking limit point D or more, the front wheel 2 locks. The front wheel braking limit point D is the lock limit point of the front wheel 2.

Furthermore, a front wheel brake boundary E linearly extending from the front wheel braking limit point D to the front-back braking limit point Z indicates the braking force of the front wheel brake 32 at the lock limit.

In the braking force map M, an unlock region F defined by the vertical axis, the horizontal axis, the rear wheel brake boundary C, and the front wheel brake boundary E is a region where the lock of each of the front wheel brake 32 and the rear wheel brake 33 is avoidable.

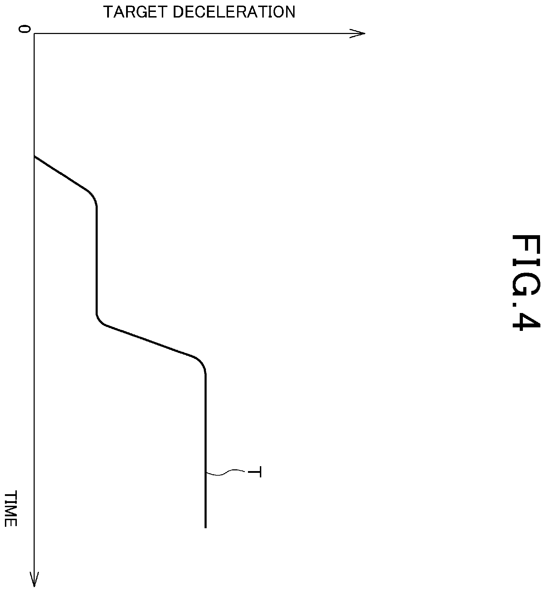

Fig. 4 is a graph showing a map of a target deceleration T of the automatic brake control.

The target deceleration T is a target value of deceleration of the motorcycle 1 in performing the automatic brake control. The map of the target deceleration T is stored in the storage 40.

The automatic brake controller 55 drives the front wheel brake 32 and the rear wheel brake 33 so that the deceleration of the motorcycle 1 reaches the target deceleration T.

A pattern of the target deceleration T changes from braking start of the automatic brake control in a stepwise manner with elapse of time, and a pattern of a latter half of the automatic brake control is set to be larger than a pattern of a front half thereof.

The target deceleration T changes in accordance with the friction coefficient of the road surface that is obtained from the friction coefficient estimation section 57. In case where the friction coefficient of the road surface is small, the target deceleration T is set to be small.

With reference to Fig. 3, the rear wheel brake boundary C and the front wheel brake boundary E change in accordance with the friction coefficient of the road surface that is obtained from the friction coefficient estimation section 57.

For example, in case where the friction coefficient of the road surface is small, an unlock region F1 defined by the vertical axis, the horizontal axis, a rear wheel brake boundary C1 and a front wheel brake boundary E1 is smaller than the unlock region F. Consequently, limit braking of the front wheel brake 32 and the rear wheel brake 33 can be performed in accordance with the friction coefficient of the road surface.

The rear wheel brake boundary C1 and the front wheel brake boundary E1 intersect at a front-back braking limit point Z1 that is an intersection on the ideal growth curve A. The front-back braking limit point Z1 corresponds to an upper-limit braking force in the unlock region F1.

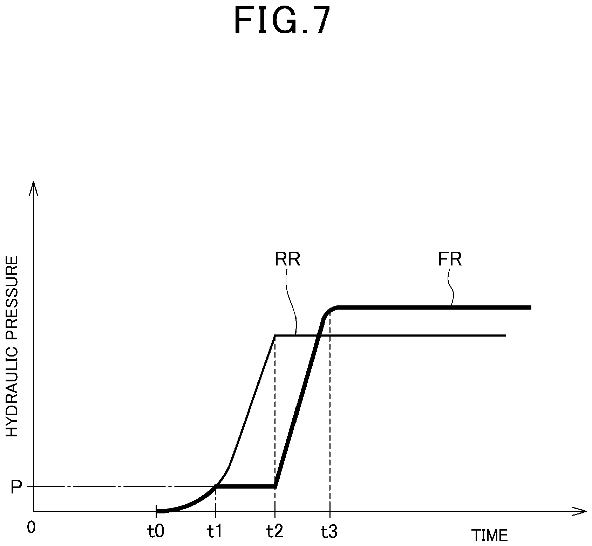

In the automatic brake control performed by the control unit 31, when it is determined that there is the possibility of collision, the rear wheel brake 33 is pressurized to brake the rear wheel 3, and the front wheel brake 32 is simultaneously pressurized up to a predetermined pressure P (Fig. 7) at which a vehicle body posture is not changed by braking of the front wheel 2.

Here, the automatic brake control will be described in detail with reference to Fig. 2, Fig. 5, Fig. 6 and others.

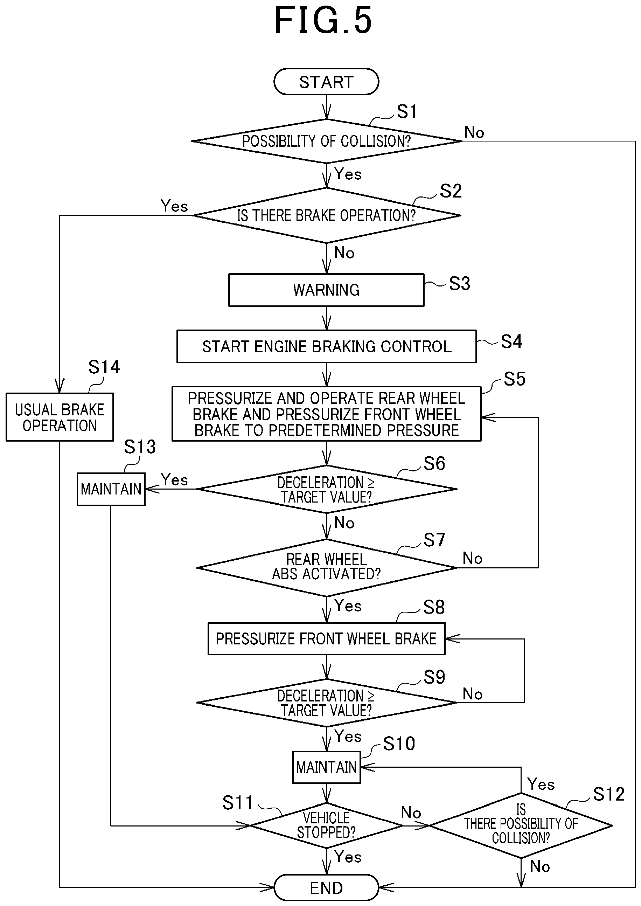

Fig. 5 is a flowchart showing processing of the automatic brake control. Processing of Fig. 5 is repeatedly executed in a predetermined control period.

First, in the control unit 31, the collision possibility determining section 53 detects whether there is the possibility of collision of the motorcycle 1 (the own vehicle) with the obstacle ahead (step S1). In detail, the collision possibility determining section 53 calculates the vehicle speed of the motorcycle 1 based on the detected values of the wheel speed sensors 42, 43, and obtains information on the obstacle ahead, the distance between the obstacle ahead and the motorcycle 1, and the relative speeds based on a detected value of the external recognition means 41.

The collision possibility determining section 53 determines the possibility of collision with the obstacle ahead in case where, for example, the braking force of the upper limit of the unlock region F1 of the braking force map M (the front-back braking limit point Z1) acts on the motorcycle 1 having the calculated vehicle speed (the step S1).

If there is no possibility of collision (the step S1: No), the control unit 31 ends the processing of the automatic brake control.

If there is the possibility of collision (the step S1: Yes), the control unit 31 determines whether there is the brake operation by the occupant based on a detection result of the brake operation determining section 54 (step S2).

If there are not any brake operations (the step S2: No), the control unit 31 gives a warning to the occupant (step S3). Examples of this warning include warning display to a meter, the warning by sound, and vibration given to the handle.

After warning, the control unit 31 starts engine braking control to control the engine braking force generated in the engine 10 (step S4).

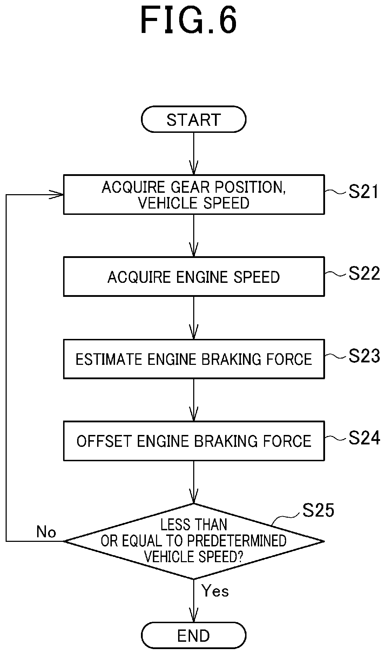

Fig. 6 is a flowchart showing processing of the engine braking control. The processing of the engine braking control is performed in parallel with the processing of the automatic brake control of Fig. 5.

First, the engine braking force estimation section 51 acquires the gear position of the transmission gear from the gear position sensor 44, also acquires the vehicle speed of the motorcycle 1 (step S21), and acquires the engine speed from the engine speed sensor 45 (step S22).

Next, the engine braking force estimation section 51 estimates the engine braking force generated in case where the throttle valve of the electronic throttle valve mechanism 27 closes, in the current transmission gear, from the gear position, the vehicle speed, and the engine speed (step S23).

Subsequently, the engine braking controller 52 of the first control unit 31a controls the engine 10 to offset and keep the engine braking force estimated in the step S23 constant (step S24). In detail, the engine braking controller 52 controls the air intake amount by the electronic throttle valve mechanism 27, the fuel supply amount by the fuel supply device 28, the ignition by the ignition plug, and the connected state of the clutch mechanism 47, to offset the engine braking force. Here, the electronic throttle valve mechanism 27 adjusts the position of the throttle valve, and offsets and keeps the engine braking force constant.

Furthermore, the clutch mechanism 47 has a degree of half clutch state adjusted, for example, in accordance with the engine braking force. When the clutch mechanism 47 is brought from the connected state to the half clutch state, the engine braking force transmitted from the engine 10 to the rear wheel 3 decreases, and hence the drive force of the engine 10 required to offset the engine braking force can decrease.

Note that in the present embodiment, both of the control of the position of the throttle valve by the electronic throttle valve mechanism 27 and the control of the connected state of the clutch mechanism 47 are performed to adjust the engine braking, but the engine braking may be adjusted only by the control of the electronic throttle valve mechanism 27.

Next, the engine braking controller 52 determines whether or not the vehicle speed of the motorcycle 1 is less than or equal to a predetermined vehicle speed (step S25) .

If the vehicle speed of the motorcycle 1 is not less than or equal to the predetermined vehicle speed (the step S25: No), the processing returns to the step S21 to continue processing of offsetting and keeping the engine braking force constant.

If the vehicle speed of the motorcycle 1 is less than or equal to the predetermined vehicle speed (the step S25: Yes), the processing of the engine braking control ends. That is, after the warning of the possibility of collision, the engine braking force is offset until the vehicle speed of the motorcycle 1 becomes less than or equal to the predetermined vehicle speed.

Here, the offset of the engine braking force means that the engine braking force becomes almost zero, but does not have to be completely zero, and it is also allowed to generate an almost constant size of a slight engine braking force.

Furthermore, in case of the offset of the engine braking force, a tension Te (Fig. 1) to be generated in case where the drive force of the engine 10 rotates the rear wheel 3 in a forward direction may be generated in the drive force transmission member 20 as long as the motorcycle 1 is not accelerated. Generally in the motorcycle 1, when the drive force acts on the rear wheel 3 that is the drive wheel, the drive force transmission member 20 can be more tense than in case where the clutch mechanism 47 is completely disconnected, and the drive force can be rapidly transmitted from the engine 10 to the rear wheel 3, to enhance uprightness of the vehicle body. That is, the drive force of the engine 10 to the rear wheel 3 is left a little, thereby making it easy to maintain the motorcycle 1 in an upright state.

Note that a rolling resistance or an air resistance of each of the front wheel 2 and the rear wheel 3 acts on the motorcycle 1, and hence the motorcycle 1 gradually decelerates also in the offset state of the engine braking force.

Here, the description returns to that of the automatic brake control of Fig. 5.

Upon start of the engine braking control of the step S4, the automatic brake controller 55 of the second control unit 31b pressurizes the rear wheel brake 33 to brake the rear wheel 3, and simultaneously pressurizes the front wheel brake 32 up to a predetermined pressure P at which a vehicle body posture of the motorcycle 1 is not changed by braking of the front wheel 2 (step S5).

In detail, play is set to each part of the brake mechanism 30 that includes a space between the front brake disk 32a and the caliper 32b, and in a state where the rear wheel brake 33 is not pressurized, there is a gap between a braking surface of the caliper 32b and the front brake disk 32a. In the step S4, the front wheel brake 32 is pressurized up to the predetermined pressure P at which the braking surface of the caliper 32b is in slight contact with the front brake disk 32a and so-called brake drag occurs. The predetermined pressure P is a limit value of the hydraulic pressure at which the vehicle body posture of the motorcycle 1 is not changed by the braking of the front wheel 2. When the braking by the front wheel brake 32 starts, load movement of the motorcycle 1 makes a stroke of each of the front forks 21 in a compressing direction to change the vehicle body posture, but the pressurizing of the front wheel brake 32 up to the predetermined pressure P does not make any strokes of the front fork 21 in the compressing direction. That is, up to the predetermined pressure P, the braking of the front wheel brake 32 does not cause pitching of the vehicle body in a direction in which the front of the motorcycle 1 sinks downward.

If the hydraulic pressure is in excess of the predetermined pressure P as described later, the caliper 32b pinches the front brake disk 32a, and braking of the front wheel 2 substantially starts.

Note that the predetermined pressure P may be a hydraulic pressure just before the braking surface of the caliper 32b comes in contact with the front brake disk 32a and at which the braking of the front wheel 2 does not start. In this case, if the pressure is in excess of the predetermined pressure P, the braking of the front wheel 2 substantially starts.

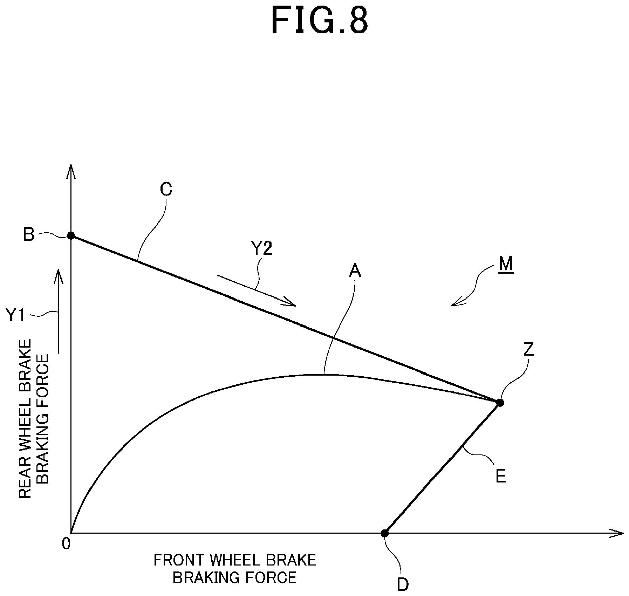

Fig. 7 is a graph showing changes in hydraulic pressures of the front wheel brake 32 and the rear wheel brake 33 in the automatic brake control. Fig. 8 is a graph showing a change in braking force in the automatic brake control. Fig. 7 shows the hydraulic pressure of the front wheel brake 32 with reference sign FR, and the hydraulic pressure of the rear wheel brake 33 with reference sign RR.

With reference to Fig. 7, in the step S5, the rear wheel brake 33 and the front wheel brake 32 simultaneously start to be pressurized at time t0, and the hydraulic pressure of the front wheel brake 32 reaches the predetermined pressure P at time t1. Thereafter, the hydraulic pressure of the front wheel brake 32 is maintained at the predetermined pressure P, and the hydraulic pressure of the rear wheel brake 33 also rises at and after the time t1.

As shown in Fig. 8, in the step S5, the braking force of the rear wheel brake 33 increases along a vertical axis as shown by arrow Y1 in Fig. 8. In the step S5, the hydraulic pressure of the front wheel brake 32 increases to the predetermined pressure P (Fig. 7), but almost no braking force of the front wheel brake 32 is generated.

Next, with reference to Fig. 5, the automatic brake controller 55 determines whether the braking only of the rear wheel brake 33 causes the deceleration of the motorcycle 1 to reach the target deceleration T (Fig. 4) based on the deceleration detector 58 (step S6).

If the deceleration does not reach the target deceleration T (the step S6: No), the automatic brake controller 55 determines whether the antilock brake control of the rear wheel brake 33 is activated (step S7) .

If the antilock brake control of the rear wheel brake 33 is not activated (the step S7: No), processing returns to the step S5 where the automatic brake controller 55 further pressurizes the rear wheel brake 33 and maintains the hydraulic pressure of the front wheel brake 32 at the predetermined pressure P.

If the antilock brake control of the rear wheel brake 33 is activated (the step S7: Yes), the automatic brake controller 55 further pressurizes the front wheel brake 32 at the predetermined pressure P, and starts the braking of the front wheel 2 by the front wheel brake 32 (step S8). That is, the automatic brake controller 55 pressurizes the rear wheel brake 33 until the antilock brake control of the rear wheel brake 33 is activated, and if the antilock brake control of the rear wheel brake 33 is activated, the braking of the front wheel 2 starts.

Here, for example, if the antilock brake control is activated to operate the front wheel brake 32 prior to the rear wheel brake 33 in a state where there are not any brake operations by the occupant, the front of the motorcycle 1 sinks downward to easily cause the pitching in the vehicle front-back direction (nose dive), which easily leads to occupant's unintended posture disturbance.

On the other hand, in the present embodiment of the present invention, first, the rear wheel brake 33 is only operated to generate the braking force of the rear wheel 3, and hence the pitching of the motorcycle 1 is inhibited from being caused. Furthermore, a sense of deceleration can be given to notify the occupant of the deceleration, and the disturbance in occupant's posture can be inhibited.

Furthermore, in the step S5, simultaneously with the braking start of the rear wheel brake 33, the pressure of the front wheel brake 32 preliminarily rises to the predetermined pressure P, and hence in the step S6, the braking force can rapidly act on the front wheel brake 32, to rapidly decelerate the motorcycle 1.

With reference to Fig. 7, in the step S7 and the step S8, at time t2, the antilock brake control of the rear wheel 3 is activated, and the front wheel brake 32 at the predetermined pressure P starts to be pressurized. Upon the activation of the antilock brake control, the hydraulic pressure of the rear wheel brake 33 is maintained almost constant.

With reference to Fig. 8, in the step S7 and the step S8, the antilock brake control of the rear wheel 3 is activated at the rear wheel braking limit point B on the vertical axis. The automatic brake controller 55 also operates the front wheel brake 32 so that the braking force follows the rear wheel brake boundary C (see arrow Y2 in Fig. 8). That is, in the step S7 and the step S8, the braking of the front wheel brake 32 is performed while maintaining a lock limit operation state of the rear wheel brake 33 by the antilock brake control.

When the braking force of the front wheel 2 is generated by the operation of the front wheel brake 32, due to the front-back pitching of the motorcycle 1, a part of the load on the motorcycle 1 to the road surface moves from a rear wheel 3 side to a front wheel 2 side, and the braking force of the rear wheel brake 33 at the lock limit decreases. Consequently, a limit braking force of the rear wheel brake 33 gradually decreases along the rear wheel brake boundary C as the braking force of the front wheel brake 32 increases, but a braking force of the whole motorcycle 1 increases that is obtained by adding up the braking forces of the front wheel brake 32 and rear wheel brake 33.

Subsequently, with reference to Fig. 5, the automatic brake controller 55 determines whether the deceleration obtained by the braking of each of the front wheel brake 32 and the rear wheel brake 33 used together in the step S8 reaches the target deceleration T (Fig. 4) (step S9).

If the deceleration does not reach the target deceleration T (the step S9: No), the processing returns to the step S8 where the automatic brake controller 55 further pressurizes the front wheel brake 32.

If the deceleration reaches the target deceleration T (the step S9: Yes), the automatic brake controller 55 controls the hydraulic pressures of the front wheel brake 32 and the rear wheel brake 33 to maintain the deceleration (step S10), and determines whether the motorcycle 1 stops (step S11).

With reference to Fig. 7, in the step S9, the antilock brake control of the front wheel brake 32 is activated at time t3. Upon the activation of the antilock brake control, the hydraulic pressure of the front wheel brake 32 is maintained almost constant. The target deceleration T in the step S9 corresponds to the deceleration at which the antilock brake control of the front wheel brake 32 is activated.

With reference to Fig. 8, in the step S9, the automatic brake controller 55 increases the braking forces of the front wheel brake 32 and the rear wheel brake 33 to such an extent that the occupant's posture is not noticeably disturbed by the deceleration. This braking force is maintained in the step S10.

With reference to Fig. 5, if the motorcycle 1 stops (the step S11: Yes), the control unit 31 ends the processing of the automatic brake control.

If the motorcycle 1 does not stop (the step S11: No), the control unit 31 determines whether there is the possibility of collision of the motorcycle 1 with the obstacle ahead (step S12).

If there is the possibility of collision (the step S12: Yes), the control unit 31 controls the front wheel brake 32 and the rear wheel brake 33 to maintain the deceleration.

If there is no possibility of collision (the step S12: No), the control unit 31 ends the processing of the automatic brake control. That is, in case where it is determined in the step S12 that there is no possibility of collision, the control unit 31 ends the processing of the automatic brake control even if the motorcycle 1 does not stop.

Furthermore, in the step S6, if the deceleration reaches the target deceleration T (the step S6: Yes), the automatic brake controller 55 maintains the deceleration to shift to the step S11 (step S13). That is, in case where the possibility of collision can be eliminated only by the operation of the rear wheel brake 33, the braking by the front wheel brake 32 is not performed.

If there is the brake operation in the step S2 (the step S2: Yes), the control unit 31 performs a usual brake operation (step S14), to end the processing of the automatic brake control. The usual brake operation includes increasing the braking force in accordance with the operation amounts of the front brake operation element 34a and the rear brake operation element 35a. In the usual brake operation, if the lock limit point is reached, the control unit 31 performs the antilock brake control to avoid the lock of the front wheel 2 and the rear wheel 3.

Note that in case where it is determined that the possibility of collision cannot be eliminated by the usual brake operation, the control unit 31 may forcibly perform the automatic brake control starting from the step S4.

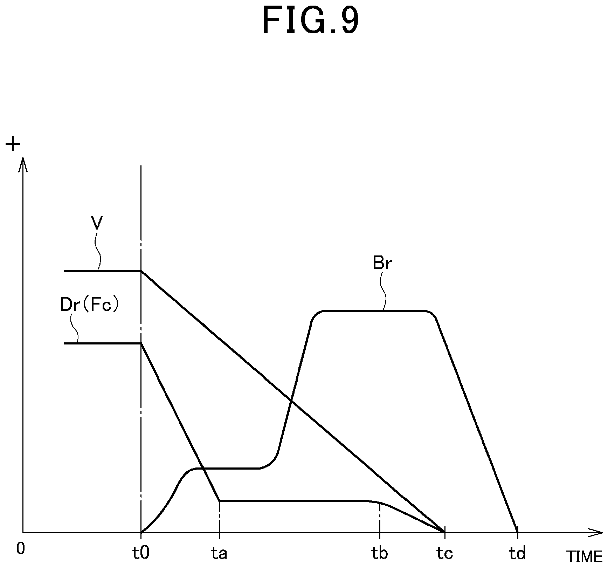

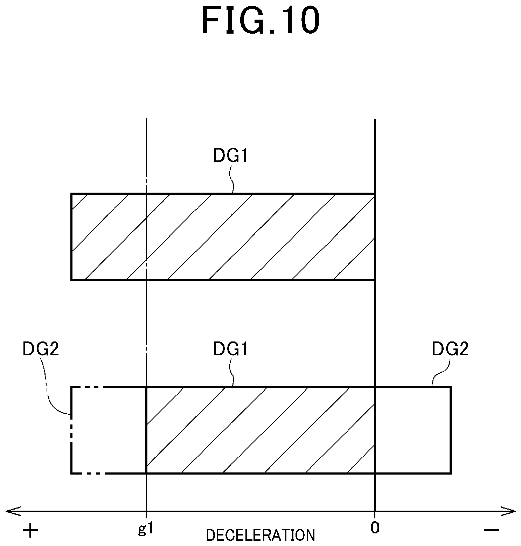

Fig. 9 is a graph showing relations among a vehicle speed V, a drive force Dr of the engine 10, and a braking force Br of the brake device in the automatic brake control. Fig. 10 is a schematic view showing a relation between a deceleration DG1 of the motorcycle 1 by the braking force Br of the automatic brake control and a deceleration DG2 of the motorcycle 1 by the drive force Dr of the engine 10. A vertical axis of Fig. 9 is an axis showing sizes of the vehicle speed V, the drive force Dr and the braking force Br.

With reference to Fig. 5 and Fig. 9, at time t0, started are the engine braking control (Fig. 6) of the step S4 and the pressurization of the rear wheel brake 33 and pre-compression of the front wheel brake 32 up to the predetermined pressure P of the step S5.

By the engine braking control and the braking of the rear wheel brake 33, the vehicle speed V gradually decreases from the time t0, and becomes zero at time tc, and the motorcycle 1 stops at the time tc.

The drive force Dr decreases from the time t0 to time ta, is then maintained almost constant till time tb, and becomes zero at the time tc. In the engine braking control, even in case where the occupant opens the accelerator operation unit 46 to perform an accelerating operation, the control unit 31 performs control to decrease the drive force Dr of the engine 10. Furthermore, in the engine braking control, even in case where the occupant closes the accelerator operation unit 46 to perform a decelerating operation, the control unit 31 generates the drive force Dr to offset the engine braking force.

The braking force Br of the brake device is stronger in a second half than in a first half of a braking period, and the force decreases after the time tc when the motorcycle 1 stops, and becomes zero at time td.

The engine braking force is offset and becomes constant immediately after the time t0 till the time tc when the motorcycle 1 stops, by the drive force Dr of the engine 10 generated by the control of the control unit 31.

The predetermined vehicle speed at which the processing of offsetting the engine braking force ends in the step S25 of Fig. 6 is the vehicle speed V of zero here. Note that the predetermined vehicle speed at which the processing of offsetting the engine braking force ends may be a positive value (e.g., 5 km/h).

Here, the offsetting of the engine braking force starts prior to the start of the braking of the rear wheel brake 33.

Note that the offsetting of the engine braking force may start prior to the start of the braking of the front wheel brake 32 and during the braking of the rear wheel brake 33.

In the present embodiment, the front wheel 2 and the rear wheel 3 are braked by the automatic brake control in the offset state of the engine braking force, and hence the engine braking force is stabilized to be almost zero. This can prevent a variation of the engine braking force from affecting the braking by the automatic brake, and can decelerate the motorcycle 1 smoothly.

Fig. 10 shows the deceleration DG1 in a decelerating direction of the motorcycle 1 by the brake 37 during the automatic brake, in a positive direction of the deceleration. Fig. 10 shows the deceleration DG2 corresponding to the drive force Dr as a value in a negative direction. Here, the drive force Dr is an example of a force Fc that offsets the engine braking force.

In case where the drive force Dr (the force Fc) by the engine braking control is not generated, the deceleration DG1 is as shown in an upper part of Fig. 10.

In case where the drive force Dr by the engine braking control is generated, the deceleration of the motorcycle 1 becomes a predetermined deceleration g1 obtained by subtracting the deceleration DG2 from the deceleration DG1 as shown in a lower part of Fig. 10.

The predetermined deceleration g1 is a deceleration when the braking force Br (Fig. 9) of the automatic brake control is combined with the drive force Dr that offsets the engine braking force.

The predetermined deceleration g1 has a value at which the occupant seated on the seat 13 can maintain an occupant's posture also during the automatic braking.
The deceleration g1 has, for example, a value that is from 30 to 50% of a gravitational acceleration.

In the motorcycle 1 where the occupant is exposed outward, the deceleration that the occupant can withstand is limited to the predetermined deceleration g1. Consequently, also in case where the engine braking force is offset by the drive force Dr, the deceleration g1 can be sufficiently achieved by the braking forces of the front wheel brake 32 and the rear wheel brake 33.

As described above, according to the embodiment to which the present invention is applied, the motorcycle 1 comprises the engine 10 including the electronic throttle valve mechanism 27 that drives the air intake throttle valve via the actuator 27a, and the first control unit 31a that controls the engine 10, and the first control unit 31a comprises the engine braking controller 52 that controls the throttle valve so as to generate the force Fc that offsets the engine braking of the engine 10 when the motorcycle 1 is decelerated.

According to this configuration, the engine braking controller 52 controls the throttle valve to generate the force Fc that offsets the engine braking when the motorcycle 1 is decelerated, and hence the engine braking can be stabilized so that the motorcycle 1 can be decelerated smoothly.

Furthermore, the motorcycle 1 comprises the clutch mechanism 47 that disconnects and connects the power transmission between the engine 10 and the rear wheel 3, and the first control unit 31a controls the connected state of the clutch mechanism 47 to reduce the engine braking. According to this configuration, the connected state of the clutch mechanism 47 is controlled so that the engine braking can reduce. Furthermore, when the clutch mechanism 47 is brought into the half clutch state, the engine braking force transmitted from the engine 10 to the rear wheel 3 can reduce, and hence the force Fc required to offset the engine braking can decrease.

Additionally, the motorcycle 1 comprises the brake 37 that brakes the front wheel 2 and the rear wheel 3, the second control unit 31b comprises the automatic brake controller 55 that performs the automatic brake control to automatically increase the braking force of the brake 37, and the automatic brake controller 55 brakes the front wheel 2 and the rear wheel 3 through the automatic brake control in the state where the engine braking is offset by the engine braking controller 52. According to this configuration, since the automatic brake controller 55 brakes the front wheel 2 and the rear wheel 3 through the automatic brake control in the state where the engine braking is offset by the engine braking controller 52, the variation of the engine braking can be prevented from affecting the braking of the automatic brake, and the motorcycle 1 can be decelerated smoothly.

Furthermore, the brake 37 comprises the rear wheel brake 33 that brakes the rear wheel 3 as the wheel, and in the automatic brake control, the rear wheel 3 that is the drive wheel to be driven by the engine 10 is braked with the rear wheel brake 33. According to this configuration, a behavior of the rear wheel 3 that is the drive wheel is stabilized by offsetting the engine braking, and in the automatic brake control, the rear wheel 3 is braked. Consequently, the variation of the engine braking can be prevented from affecting the braking of the automatic brake, and the motorcycle 1 can be decelerated smoothly.

Additionally, the brake 37 comprises the front wheel brake 32 that brakes the front wheel 2 that is the driven wheel, and in the automatic brake control, the automatic brake controller 55 brakes with the rear wheel brake 33 prior to the front wheel brake 32. According to this configuration, the rear wheel 3 is braked prior to the front wheel 2, front-back pitching of a saddled vehicle can reduce, and an operation of the automatic brake is hard to affect the occupant's posture.

Furthermore, the first control unit 31a performs control so that the deceleration in case where the braking force of the automatic brake control is combined with the force Fc that offsets the engine braking and keeps the engine braking constant is smaller than the predetermined deceleration g1. When the engine braking is offset, the motorcycle 1 is not decelerated by the engine braking, and hence the braking force decreases.
In the motorcycle 1, however, the deceleration by the automatic brake is limited due to effects on the occupant's posture. Consequently, even in case where the engine braking is offset, the motorcycle 1 can be sufficiently decelerated by the automatic brake. Furthermore, since the motorcycle 1 is controlled so that the deceleration is smaller than the predetermined deceleration g1, the effects of the automatic brake on the occupant's posture can reduce.

Additionally, in the above embodiment, the first control unit 31a and the second control unit 31b are integrally provided, but the first control unit 31a and the second control unit 31b may be provided separately. In this case, the first control unit 31a and the second control unit 31b can be arranged individually, and a degree of freedom in arrangement is high.

Note that the above embodiments merely illustrate an aspect to which the present invention is applied, and the present invention is not limited to the above embodiments.

In the above embodiments, the motorcycle 1 has been described as the example of the saddled vehicle, but the present invention is not limited to this example, and the present invention is applicable to a saddled vehicle with three wheels including two front or rear wheels or a saddled vehicle including four or more wheels.

### Reference Signs List

- 1: motorcycle
- 2: front wheel (a wheel)
- 3: rear wheel (a wheel)
- 10: engine
- 27: electronic throttle valve mechanism
- 27a: actuator
- 31a: first control unit
- 31b: second control unit
- 32: front wheel brake
- 33: rear wheel brake
- 37: brake
- 47: clutch mechanism
- 52: engine braking controller
- 55: automatic brake controller
- g1: predetermined deceleration
- Fc: force (a force that offsets engine braking)

## Claims

1. A saddled vehicle comprising:
an engine (10) including an electronic throttle valve mechanism (27) that drives an air intake throttle valve via an actuator (27a), and a first control unit (31a) that controls the engine (10);
a control unit (31) including the first control unit (31a) and a second control unit (31b), wherein the first control unit (31a) comprises an engine braking controller (52) configured to control the throttle valve so as to generate a force (Fc) that offsets engine braking of the engine (10) when the vehicle is decelerated;
a rear wheel brake (33) configured to brake a rear wheel (3); and
a front wheel brake (32) configured to brake a front wheel (2) that is a driven wheel; wherein
the second control unit (31b) comprises an automatic brake controller (55) configured to perform automatic brake control to automatically increase a braking force of the front wheel brake (32) and the rear wheel brake (33);
in the automatic brake control, the automatic brake controller (55) brakes, prior to the front wheel brake (32), the rear wheel (3) that is a drive wheel to be driven by the engine (10) with the rear wheel brake (33); and
in case where it is determined that there is a possibility of collision of the saddled vehicle, the control unit (31) is configured to control the throttle valve to start a process of generating the force (Fc) that offsets the engine braking prior to the start of the braking of the front wheel brake (32) und during braking of the rear wheel brake (33), and then brakes the wheels (2, 3) through the automatic brake control in a state where the engine braking is offset and is constant.

2. The saddled vehicle according to claim 1, comprising
a clutch mechanism (47) configured to disconnect and connect power transmission between the engine (10) and a wheel (3), wherein
the first control unit (31a) comprises a clutch controller (60) configured to control a connected state of the clutch mechanism (47), and
the first control unit (31a) is configured to control the connected state of the clutch mechanism (47) to keep the engine braking constant.

3. The saddled vehicle according to any one of claims 1 and 2, wherein
the first control unit (31a) is configured to control the engine braking so that a deceleration in case where a braking force of the automatic brake control is combined with a force (Fc) that offsets the engine braking is smaller than a predetermined deceleration (g1).

4. The saddled vehicle according to any one of claims 1 to 3, wherein
the first control unit (31a) and the second control unit (31b) are provided separately.

5. The saddled vehicle according to any one of claims 1 to 4, wherein
the front wheel brake (32) is configured to brake the front wheel (2) in accordance with a hydraulic pressure, and
in the automatic brake control, the rear wheel brake (33) is pressurized to brake the rear wheel (3), and simultaneously the front wheel brake (32) is pressurized up to a predetermined pressure (P) at which a vehicle body posture is not changed by the braking of the front wheel (2).

## Patentansprüche

1. Fahrzeug vom Satteltyp, aufweisend:
einen Motor (10) mit einem elektronischen Drosselklappenmechanismus (27), der über ein Stellglied (27a) eine Lufteinlassdrosselklappe verstellt, und eine erste Steuereinheit (31a), die den Motor (10) steuert;
eine Steuereinheit (31), die die erste Steuereinheit (31a) und eine zweite Steuereinheit (31b) aufweist, wobei die erste Steuereinheit (31a) eine Motorbremssteuerung (52) umfasst, die so ausgebildet ist, dass sie die Drosselklappe so steuert, dass eine Kraft (Fc) erzeugt wird, welche die Motorbremsung des Motors (10) ausgleicht, wenn das Fahrzeug abgebremst wird;
eine Hinterradbremse (33), die zum Bremsen eines Hinterrades (3) ausgebildet ist; und
eine Vorderradbremse (32), die zum Bremsen eines Vorderrades (2) ausgebildet ist, welches ein angetriebenes Rad darstellt; wobei
die zweite Steuereinheit (31b) einen automatischen Bremskraftregler (55) aufweist, der so ausgebildet ist, dass er eine automatische Bremssteuerung durchführt, um eine Bremskraft der Vorderradbremse (32) und der Hinterradbremse (33) automatisch zu erhöhen, wobei
bei der automatischen Bremssteuerung der automatische Bremskraftregler (55) vor dem Bremsen der Vorderradbremse (32) das Hinterrad (3), welches ein vom Motor (10) angetriebenes Antriebsrad darstellt, mit der Hinterradbremse (33) bremst; und
für den Fall, dass festgestellt wird, dass die Möglichkeit einer Kollision des Fahrzeugs vom Satteltyp besteht, die Steuereinheit (31) so ausgebildet ist, dass sie die Drosselklappe steuert, um einen Prozess zur Erzeugung der Kraft (Fc) zu veranlassen, welche die Motorbremsung vor dem Beginn des Bremsens der Vorderradbremse (32) und während des Bremsens der Hinterradbremse (33) ausgleicht, und dann die Räder (2, 3) durch die automatische Bremssteuerung in einem Zustand abbremst, in dem die Motorbremsung ausgeglichen und konstant ist.

2. Fahrzeug vom Satteltyp nach Anspruch 1, aufweisend
einen Kupplungsmechanismus (47), der zum Trennen und Verbinden der Kraftübertragung zwischen dem Motor (10) und einem Rad (3) ausgebildet ist, wobei
die erste Steuereinheit (31a) eine Kupplungssteuerung (60) umfasst, die ausgebildet ist, um einen gekuppelten Zustand des Kupplungsmechanismus (47) zu steuern, und
die erste Steuereinheit (31a) ausgebildet ist, um den gekuppelten Zustand des Kupplungsmechanismus (47) zu steuern, um die Motorbremsung konstant zu halten.

3. Fahrzeug vom Satteltyp nach einem der Ansprüche 1 und 2, wobei
die erste Steuereinheit (31a) so ausgebildet ist, dass sie die Motorbremsung so steuert, dass eine Verlangsamung in dem Fall, in dem eine Bremskraft der automatischen Bremssteuerung mit einer die Motorbremsung ausgleichenden Kraft (Fc) kombiniert wird, geringer ist als eine vorgegebene Verlangsamung (g1).

4. Fahrzeug vom Satteltyp nach einem der Ansprüche 1 bis 3, wobei
die erste Steuereinheit (31a) und die zweite Steuereinheit (31b) separate Einheiten darstellen.

5. Fahrzeug vom Satteltyp nach einem der Ansprüche 1 bis 4, wobei
die Vorderradbremse (32) zum Abbremsen des Vorderrades (2) in Abhängigkeit von einem hydraulischen Druck ausgebildet ist, und
bei der automatischen Bremssteuerung die Hinterradbremse (33) mit Druck beaufschlagt wird, um das Hinterrad (3) abzubremsen, und gleichzeitig die Vorderradbremse (32) mit Druck beaufschlagt wird, bis zu einem vorgegebenen Druck (P), bei dem eine Fahrzeuglage durch das Abbremsen des Vorderrades (2) nicht verändert wird.

## Revendications

1. Véhicule à selle comprenant :
un moteur (10) comportant un mécanisme électronique de soupape d'étranglement (27) qui entraîne une soupape d'étranglement d'admission d'air via un actionneur (27a), et une première unité de commande (31a) qui commande le moteur (10) ;
une unité de commande (31) comportant la première unité de commande (31a) et une deuxième unité de commande (31b), dans lequel la première unité de commande (31a) comprend un dispositif de commande de freinage moteur (52) configuré pour commander la soupape d'étranglement de manière à générer une force (Fc) qui contrebalance le freinage moteur du moteur (10) lorsque le véhicule est décéléré ;
un frein de roue arrière (33) configuré pour freiner une roue arrière (3) ; et
un frein de roue avant (32) configuré pour freiner une roue avant (2) qui est une roue entraînée ; dans lequel
la deuxième unité de commande (31b) comprend un dispositif de commande de frein automatique (55) configuré pour réaliser une commande de frein automatique pour augmenter automatiquement une force de freinage du frein de roue avant (32) et du frein de roue arrière (33) ;
dans la commande de frein automatique, le dispositif de commande de frein automatique (55) freine, avant le frein de roue avant (32), la roue arrière (3) qui est une roue motrice devant être entraînée par le moteur (10) avec le frein de roue arrière (33) ; et
dans le cas où il est déterminé qu'il y a une possibilité de collision du véhicule à selle, l'unité de commande (31) est configurée pour commander la soupape d'étranglement pour démarrer un processus de génération de la force (Fc) qui contrebalance le freinage moteur avant le démarrage du freinage du frein de roue avant (32) et pendant le freinage du frein de roue arrière (33), et freine ensuite les roues (2, 3) par l'intermédiaire de la commande de frein automatique dans un état où le freinage moteur est contrebalancé et est constant.

2. Véhicule à selle selon la revendication 1, comprenant
un mécanisme d'embrayage (47) configuré pour déconnecter et connecter une transmission de puissance entre le moteur (10) et une roue (3), dans lequel
la première unité de commande (31a) comprend un dispositif de commande d'embrayage (60) configuré pour commander un état connecté du mécanisme d'embrayage (47), et
la première unité de commande (31a) est configurée pour commander l'état connecté du mécanisme d'embrayage (47) pour garder le freinage moteur constant.

3. Véhicule à selle selon l'une quelconque des revendications 1 et 2, dans lequel
la première unité de commande (31a) est configurée pour commander le freinage moteur de sorte qu'une décélération, dans le cas où une force de freinage de la commande de frein automatique est combinée avec une force (Fc) qui contrebalance le freinage moteur, soit inférieure à une décélération (g1) prédéterminée.

4. Véhicule à selle selon l'une quelconque des revendications 1 à 3, dans lequel
la première unité de commande (31a) et la deuxième unité de commande (31b) sont prévues séparément.

5. Véhicule à selle selon l'une quelconque des revendications 1 à 4, dans lequel le frein de roue avant (32) est configuré pour freiner la roue avant (2) en fonction d'une pression hydraulique, et
dans la commande de frein automatique, le frein de roue arrière (33) est mis sous pression pour freiner la roue arrière (3), et simultanément, le frein de roue avant (32) est mis sous pression jusqu'à une pression (P) prédéterminée à laquelle une posture de carrosserie de véhicule n'est pas modifiée par la roue avant (2).
